# EUROPEAN PATENT APPLICATION

(11) **EP 4 792 986 A1**
(43) Date of publication of application: **19.08.2026**
(21) Application number: 26158574.9
(22) Date of filing: 13.02.2026
(51) Int. Cl.: B25C 1/04

(54) **DRIVING TOOL**

(30) Priority: 17.02.2025 JP 2025023803
(71) Applicant: MAX CO., LTD., Tokyo 103-8502 (JP)
(72) Inventor: TANAKA, Hiroshi, Tokyo, 103-8502 (JP); MURAKAMI, Kosuke, Tokyo, 103-8502 (JP)
(74) Representative: Samson & Partner Patentanwälte mbB

(57) **Abstract**

A driving tool includes: a main chamber configured to store compressed air; a striking cylinder configured to move a striking piston in an axial direction along an up-down direction by being supplied with the compressed air stored in the main chamber; a main valve portion configured to open and close communication between the striking cylinder and the main chamber; a trigger valve portion configured to cause the main valve portion to operate; and a first stem configured to be actuated in response to an operation. The trigger valve portion includes a pilot valve configured to cause the main valve portion to operate, and a second stem configured to control intake and exhaust of the compressed air to switch whether the pilot valve operates. The first stem causes the second stem to operate.

## Description

### TECHNICAL FIELD

The present disclosure relates to a driving tool for driving a consumable into a driven member.

### BACKGROUND ART

In the related art, in a driving tool that drives out a consumable such as a screw or a nail, opening and closing of a main valve are controlled by intake and exhaust of air by operating a trigger valve. In the driving tool, a striking cylinder is provided in a main body, and a main valve is provided on an upper side of the striking cylinder, that is, on an upper side of the main body. On the other hand, a trigger valve is configured to operate in response to operation of a trigger by an operator, and is provided in a handle portion (see, for example, JP6620463B).

On the other hand, there has been proposed a driving tool in which a trigger valve is provided on an upper side of a main body and a trigger valve stem for operating the trigger valve is extended to a trigger portion (for example, see JPH07-136944A).

### SUMMARY

However, in the configuration in which the trigger valve is provided in the handle portion, a flow path length from the trigger valve to the main valve is longer, and thus time required for intake and exhaust becomes long, and an operation response deteriorates.

Further, in the configuration in which the trigger valve stem is extended to the trigger portion and the trigger valve stem can be directly operated by the trigger portion, in order to bring the extended trigger valve stem into contact with a predetermined portion of the trigger portion, highly accurate alignment is required, and high accuracy of component dimensions is required. As a result, productivity deteriorates.

Illustrative aspects of the present disclosure provide a driving tool that can relax positional accuracy of a component.

One illustrative aspect of the present disclosure provides a driving tool including: a main chamber configured to store compressed air; a striking cylinder configured to move a striking piston in an axial direction along an up-down direction by being supplied with the compressed air stored in the main chamber; a main valve portion configured to open and close communication between the striking cylinder and the main chamber; a trigger valve portion configured to cause the main valve portion to operate; and a first stem configured to be actuated in response to an operation. The trigger valve portion includes a pilot valve configured to cause the main valve portion to operate, and a second stem configured to control intake and exhaust of the compressed air to switch whether the pilot valve operates. The first stem causes the second stem to operate.

In the present disclosure, when the first stem receives the operation and the second stem is operated, the second stem controls the intake and exhaust of the compressed air to switch the presence or absence of the operation of the pilot valve for operating the main valve portion, the main valve portion is opened by the operation of the pilot valve, and the striking cylinder and the main chamber communicate with each other.

Another illustrative aspect of the present disclosure provides a driving tool including: a main body extending in an up-down direction; a main chamber configured to store compressed air; a striking cylinder configured to move a striking piston in an axial direction by being supplied with the compressed air stored in the main chamber; a main valve portion configured to open and close communication between the striking cylinder and the main chamber; a trigger valve portion configured to cause the main valve portion to operate; and a cylinder cap attached to the main body and configured to cover an upper side of the main body. The main valve portion and the trigger valve portion are accommodated in the cylinder cap.

In the present disclosure, since the first stem that receives the operation and the second stem of the trigger valve portion are formed of different components, positional accuracy when the trigger valve portion is assembled to the main body can be relaxed.

Further, in the present disclosure, the cylinder cap in which the main valve portion and the trigger valve portion are assembled can be supplied as an assembly component.

### BRIEF DESCRIPTION OF DRAWINGS

[JP0013] Illustrative embodiments of the present disclosure will be described in detail based on the following figures, wherein:
FIG. 1 is a side sectional view illustrating an example of a nail gun according to the present illustrative embodiment;
FIG. 2 is an external side view illustrating the example of the nail gun according to the present illustrative embodiment;
FIG. 3 is a side sectional view of a main part illustrating the example of the nail gun according to the present illustrative embodiment;
FIG. 4 is a perspective view of main parts of a main valve portion and a trigger valve portion illustrating the example of the nail gun according to the present illustrative embodiment;
FIG. 5 is a side sectional view of the main part of the main valve portion illustrating the example of the nail gun according to the present illustrative embodiment;
FIG. 6 is a side sectional view of the main part of the trigger valve portion illustrating the example of the nail gun according to the present illustrative embodiment;
FIG. 7 is a side sectional view of the main part of the trigger valve portion illustrating the example of the nail gun according to the present illustrative embodiment;
FIG. 8 is a side sectional view of a main part illustrating an example of operation of the nail gun according to the present illustrative embodiment;
FIG. 9 is a side sectional view of the main part illustrating the example of the operation of the nail gun according to the present illustrative embodiment;
FIG. 10 is a side sectional view of the main part illustrating the example of the operation of the nail gun according to the present illustrative embodiment;
FIG. 11 is a side sectional view of the main part illustrating the example of the operation of the nail gun according to the present illustrative embodiment;
FIG. 12 is a side sectional view of a main part illustrating a first modification of the nail gun according to the present illustrative embodiment;
FIG. 13 is a side sectional view of a main part illustrating an example of operation of the nail gun according to the first modification of the present illustrative embodiment;
FIG. 14 is a side sectional view of a main part illustrating a second modification of the nail gun according to the present illustrative embodiment;
FIG. 15 is a side sectional view of a main part illustrating an example of operation of the nail gun according to the second modification of the present illustrative embodiment;
FIG. 16 is a side sectional view of a main part illustrating a third modification of the nail gun according to the present illustrative embodiment; and
FIG. 17 is a side sectional view of the main part illustrating the third modification of the nail gun according to the present illustrative embodiment.

### DESCRIPTION OF EMBODIMENTS

Hereinafter, illustrative embodiments of a nail gun as an example of a driving tool of the present invention will be described with reference to the drawings.

### {Configuration Example of Nail Gun}

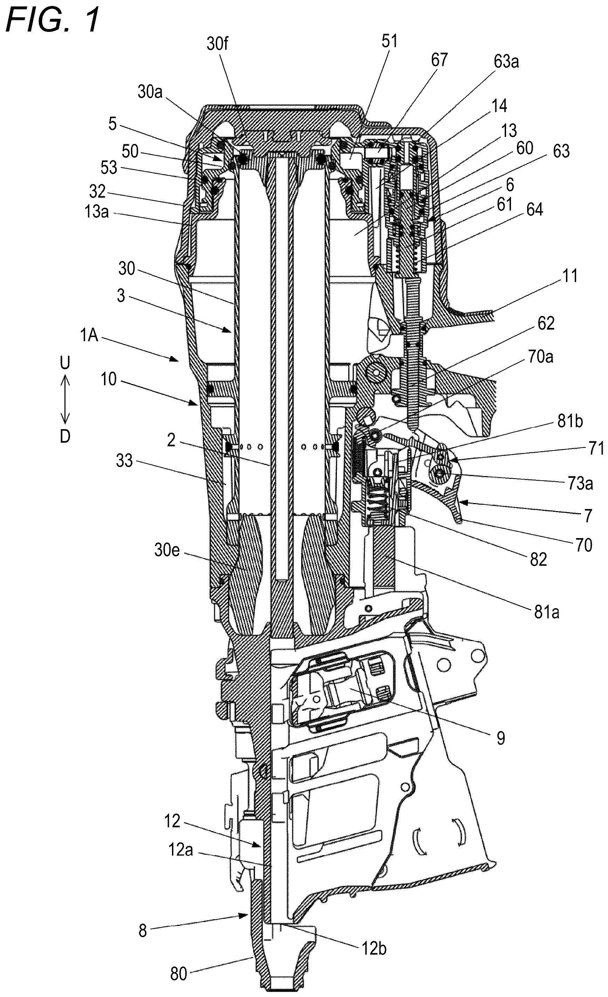

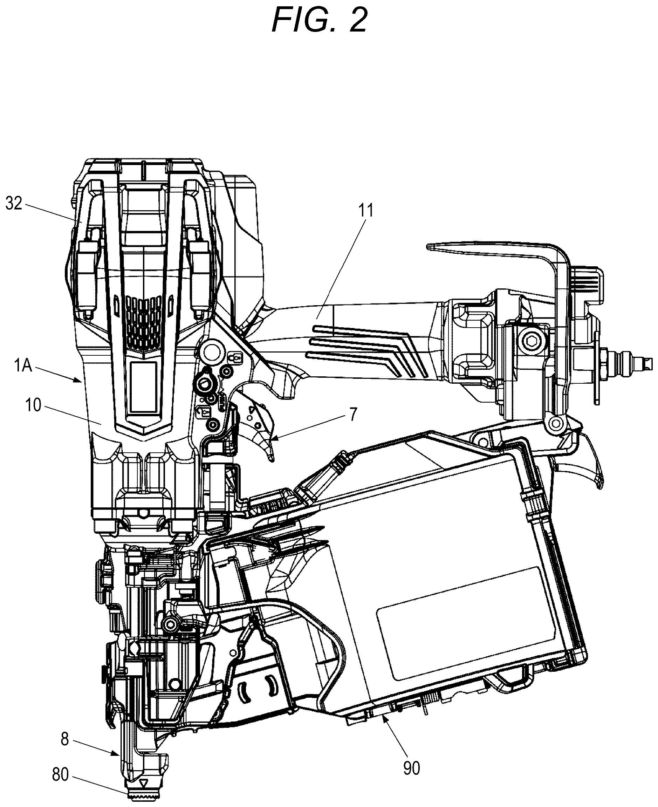

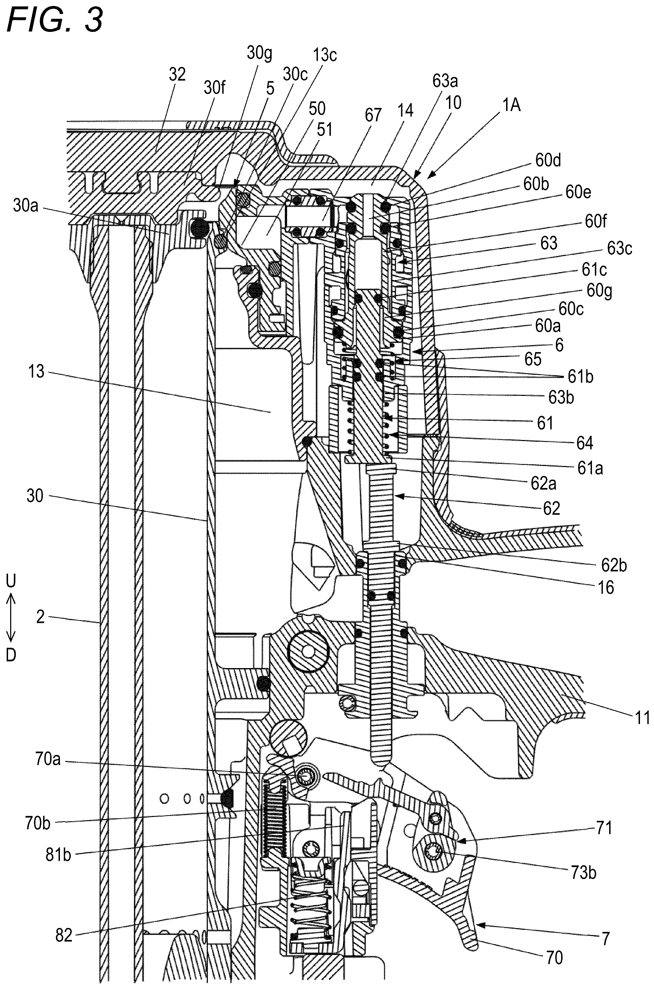

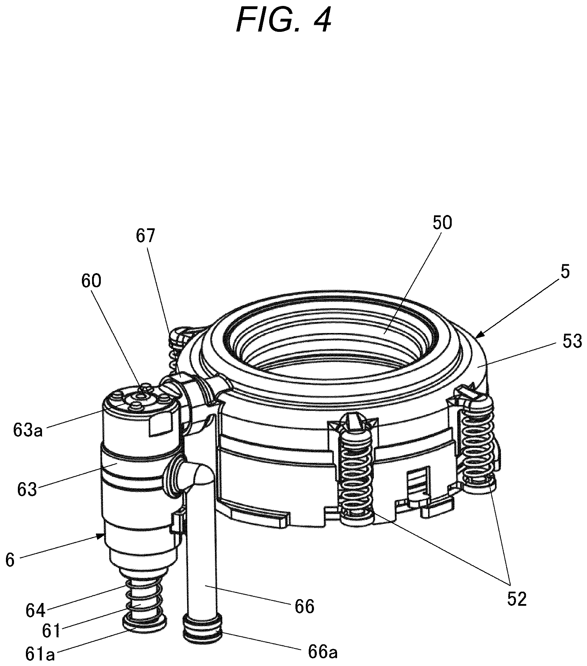

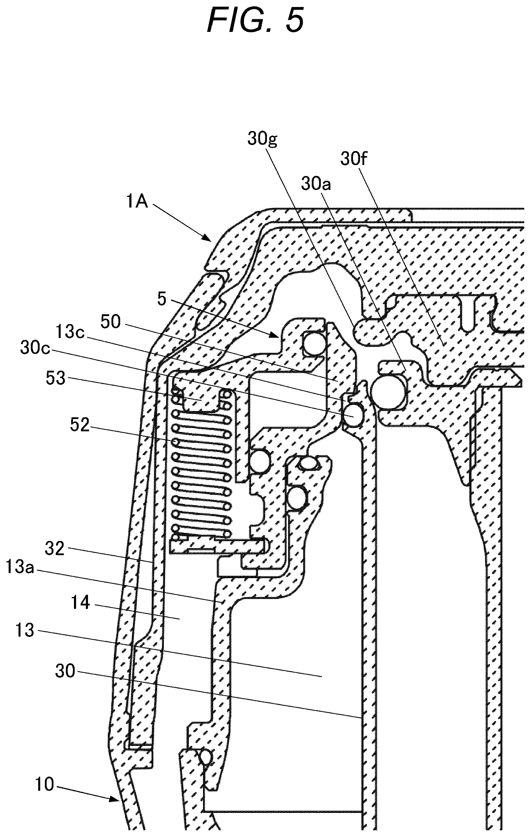

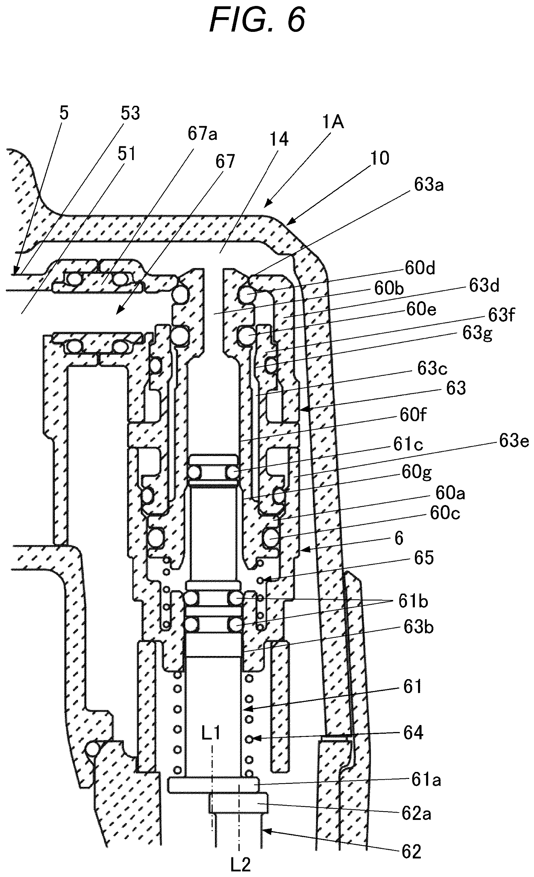

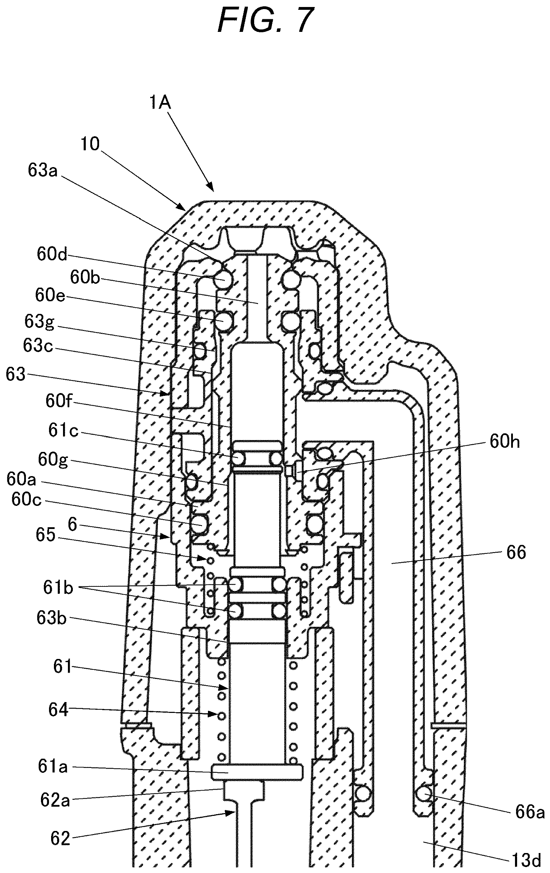

FIG. 1 is a side sectional view illustrating an example of a nail gun according to the present illustrative embodiment, FIG. 2 is an external side view illustrating the example of the nail gun according to the present illustrative embodiment, and FIG. 3 is a side sectional view of a main part illustrating the example of the nail gun according to the present illustrative embodiment. FIG. 4 is a perspective view of main parts of a main valve portion and a trigger valve portion illustrating the example of the nail gun according to the present illustrative embodiment, and FIG. 5 is a side sectional view of the main part of the main valve portion illustrating the example of the nail gun according to the present illustrative embodiment. Further, FIGS. 6 and 7 are side sectional views of the main part of the trigger valve portion illustrating the example of the nail gun according to the present illustrative embodiment.

A nail gun 1A causes a driver 2 to move in an axial direction using air pressure of compressed air. The nail gun 1A drives a nail (not illustrated), which is a consumable, into a driven member by moving the driver 2 in the axial direction.

The nail gun 1A includes a main body 10. The main body 10 extends in an up-down direction along the axial direction of the driver 2. The nail gun 1A has such a form that a person holds it with his or her hand to use it, and includes a handle portion 11 in the main body 10.

In the nail gun 1A, the handle portion 11 is provided near the middle along an extension direction of the main body 10. The handle portion 11 extends in a direction intersecting the main body 10 extending in the up-down direction. The exterior of the main body 10 is made of a resin, and the handle portion 11 is integrally formed with the main body 10. The nail gun 1A also includes a nose portion 12. Further, in the nail gun 1A, the nose portion 12 is provided on one side along the extension direction of the main body 10.

As illustrated in FIG. 1 and the like, the nail gun 1A is illustrated with the nose portion 12 facing downward, one side along the extension direction of the main body 10, which is a driving direction of the nail (not illustrated), is referred to as a lower side, and the other side along the extension direction of the main body 10 is referred to as an upper side. In the nail gun 1A, a down direction is indicated by an arrow D. In the nail gun 1A, an up direction opposite to the down direction is indicated by an arrow U. The driver 2 has the axial direction oriented along the up-down direction, and moves downward and upward.

The nose portion 12 includes an injection passage 12a through which a nail is supplied, and an injection port 12b through which the nail supplied to the injection passage 12a is injected.

The injection passage 12a extends along the up-down direction in which the driver 2 moves. The injection port 12b is formed to have an opening at a lower end along an extension direction of the injection passage 12a.

The nail gun 1A includes a main chamber 13 to which compressed air is supplied from an external air compressor (not illustrated), a main chamber housing 13a configuring the main chamber 13, and an exhaust chamber 14 exhausting the compressed air. Further, the nail gun 1A includes a driving portion 3 that drives the nail into the driven member. The driving portion 3 includes a striking cylinder 30 that is supplied with the compressed air from the main chamber 13 and causes the driver 2 to move in the axial direction, and a striking piston 30a that moves by the air pressure of the compressed air supplied to the striking cylinder 30.

The striking cylinder 30 is formed of a cylindrical member extending in the up-down direction and having open upper and lower ends, and is attached to the inside of the main body 10.

The striking cylinder 30 is internally provided with the striking piston 30a. The striking piston 30a has a circular plate shape, a cylindrical shape, and the like that can move inside the striking cylinder 30 along the up-down direction. The striking piston 30a is attached in such a shape that the driver 2 protrudes downward.

In the nail gun 1A, when the striking piston 30a moves in the up-down direction inside the striking cylinder 30, the driver 2 moves in the arrow D direction and the arrow U direction along the axial direction.

Accordingly, in the nail gun 1A, the striking piston 30a moves the driver 2 downward as indicated by the arrow D along the axial direction by the air pressure of the compressed air supplied to the striking cylinder 30, and the nail is driven into the driven member.

The striking cylinder 30 includes a lower bumper 30e at a lower end in the axial direction. The lower bumper 30e is formed of an annular elastic body, is exposed to the opening on the lower end of the striking cylinder 30, and has a shape that allows the striking piston 30a to come into contact with it. The striking piston 30a is movable downward to a position in contact with the lower bumper 30e. In the striking piston 30a and the driver 2, a position where the striking piston 30a comes into contact with the lower bumper 30e is a bottom dead center position. The lower bumper 30e is elastically deformable, and the bottom dead center position of the striking piston 30a and the driver 2 moves within a range in which the lower bumper 30e is elastically deformable.

In the nail gun 1A, a supply flow path 13c through which the compressed air supplied from the main chamber 13 to the striking cylinder 30 passes is formed around the outer periphery near the upper end of the striking cylinder 30 between the opening on the upper end of the striking cylinder 30 and the main chamber 13. The striking cylinder 30 includes a supply flow path sealing portion 30c on the outer periphery near the upper end thereof. The supply flow path sealing portion 30c is formed of, for example, an O-ring having elasticity, and is fitted into a groove provided in an outer periphery near the upper end of the striking cylinder 30 in a form in which a part thereof protrudes from an outer peripheral surface of the striking cylinder 30.

The striking cylinder 30 is accommodated in a space inside the main body 10. An upper portion of the main body 10 is open, and when the striking cylinder 30 is accommodated, an upper portion of the striking cylinder 30 is exposed upward from the opening in the upper portion.

The nail gun 1A includes a cylinder cap 32. The cylinder cap 32 is formed of a component different from the main body 10, and is attached to the upper portion of the main body 10. When the cylinder cap 32 is attached to the upper portion of the main body 10 in a shape covering the opening in the upper portion of the main body 10, the upper portion of the striking cylinder 30 is accommodated.

The cylinder cap 32 includes an upper bumper 30f on an upper end of the striking cylinder 30 in the axial direction. The upper bumper 30f is formed of a circular elastic body and has a shape that allows the striking piston 30a to come into contact with it. The upper bumper 30f is attached to an inner surface of an upper portion of the cylinder cap 32 and faces the opening on the upper end of the striking cylinder 30 in the axial direction. The striking piston 30a is movable in the up direction to a position in contact with the upper bumper 30f. In the striking piston 30a and the driver 2, a position where the striking piston 30a comes into contact with the upper bumper 30f is a top dead center position. The upper bumper 30f is elastically deformable, and the top dead center position of the striking piston 30a and the driver 2 moves within a range in which the upper bumper 30f is elastically deformable.

The upper bumper 30f includes an exhaust flow path sealing portion 30g on an outer periphery thereof. The exhaust flow path sealing portion 30g is integrally formed on the outer periphery of the upper bumper 30f, which is the elastic body.

The main chamber 13 has a shape in which the main chamber housing 13a covers the periphery of the upper side of the striking cylinder 30, and is provided on the outer periphery of the striking cylinder 30 within the handle portion 11, the main body 10 connected to the handle portion 11, and the main chamber housing 13a. The main chamber housing 13a is attached in the cylinder cap 32 on an upper side of the main body 10. The exhaust chamber 14 is a space formed around the main chamber housing 13a and inside the cylinder cap 32, and forms a flow path connecting the opening on the upper end of the striking cylinder 30 to an exhaust hole (not illustrated) provided in the main body 10.

The nail gun 1A also includes a blowback chamber 33 that returns the striking piston 30a that has moved to the bottom dead center position to the top dead center position.

The nail gun 1A includes a main valve portion 5 that switches between supplying and not supplying the compressed air to the striking cylinder 30, a trigger valve portion 6 that causes the main valve portion 5 to operate, and a trigger portion 7 that causes the trigger valve portion 6 to operate. The nail gun 1A also includes a contact portion 8 that causes the trigger valve portion 6 to be operable in cooperation with the operation of the trigger portion 7. Further, the nail gun 1A includes a feeding portion 9 that feeds the nail (not illustrated), which is a consumable, to the nose portion 12, and a magazine 90 that accommodates the nail fed by the feeding portion 9.

The main valve portion 5 includes a head valve 50 that opens and closes communication between the main chamber 13 and the striking cylinder 30, a control chamber 51 that controls the opening and closing of the head valve 50 by exhaust of the compressed air, and main valve biasing members 52 that bias the head valve 50. Further, the main valve portion 5 includes a main valve housing 53 that supports the head valve 50 and the like.

The head valve 50 is provided around the vicinity of the upper end of the striking cylinder 30. The main valve housing 53 has a shape covering an outer periphery of the head valve 50. The head valve 50 is attached to the inside of the main valve housing 53 and supported to be movable in the up-down direction with respect to the main valve housing 53. In the main valve portion 5, the control chamber 51 is provided in the main valve housing 53. When the head valve 50 is attached to the inside of the main valve housing 53, the control chamber 51 is formed inside the main valve housing 53 and around the head valve 50.

The main valve biasing member 52 is formed of, for example, a coil spring, and is provided outside the main valve housing 53. In this example, the main valve biasing member 52 biases the head valve 50 in a closing direction.

The main valve housing 53 to which the head valve 50 and the main valve biasing member 52 are assembled is accommodated in the cylinder cap 32 and attached to the upper portion of the main body 10. Accordingly, in the main valve portion 5, the head valve 50 is provided on the upper portion in the main body 10. Further, in the main valve portion 5, the control chamber 51 is provided in the upper portion of the main body 10 and around the head valve 50.

In the main valve portion 5, when the head valve 50 moves downward, the head valve 50 comes into contact with the supply flow path sealing portion 30c to close the supply flow path 13c, and brings the striking cylinder 30 and the main chamber 13 into a non-communicating state. In the main valve portion 5, when the head valve 50 moves upward, the head valve 50 is separated from the supply flow path sealing portion 30c to open the supply flow path 13c, and the head valve 50 comes into contact with the exhaust flow path sealing portion 30g to seal a space between the striking cylinder 30 and the exhaust chamber 14, thereby bringing the striking cylinder 30 and the main chamber 13 into a communicating state.

The trigger valve portion 6 includes a pilot valve 60 that opens and closes the control chamber 51, and a trigger valve upper stem 61 that operates the pilot valve 60. The nail gun 1A also includes a trigger valve lower stem 62 that causes the trigger valve upper stem 61 to operate. The following example is an illustrative embodiment of the present disclosure, and the configuration of the position of each sealing portion and the exhaust position is not limited to the illustrative embodiment as long as the pilot valve 60 is operable. For example, the sealing portion is not limited to the O-ring. Further, the sealing portion such as the O-ring may be provided on an inner peripheral surface side of the cylindrical member instead of an outer periphery of a shaft-shaped member. Further, a configuration in which predetermined airtightness is maintained by contact between resin components without using the elastic body may be employed.

The pilot valve 60 extends in the up-down direction, and is provided with a flange portion 60a protruding outward from an outer peripheral surface on an outer periphery of a lower end side. The pilot valve 60 has a space formed therein that connects an upper end surface to a lower end surface, both the upper end surface and the lower end surface being open. In the pilot valve 60, a ventilation portion 60b is formed at the opening of the upper end surface.

The pilot valve 60 includes a first sealing portion 60c on an outer periphery of the flange portion 60a, and includes a second sealing portion 60d and a third sealing portion 60e on an upper end side thereof. The first sealing portion 60c is formed of an O-ring having elasticity, and is fitted into a groove provided on the outer periphery of the flange portion 60a in a form in which a part thereof protrudes from an outer peripheral surface of the flange portion 60a. The second sealing portion 60d is formed of an elastic O-ring, and is fitted into a groove provided on the outer periphery of the pilot valve 60 in a form in which a part thereof protrudes from the outer peripheral surface on the upper end side of the pilot valve 60. The third sealing portion 60e is formed of an elastic O-ring, and is fitted into a groove provided on the outer periphery of the pilot valve 60 below the second sealing portion 60d in a form in which a part thereof protrudes from the outer peripheral surface on the upper end side of the pilot valve 60.

In the pilot valve 60, a first support portion 60f that supports the trigger valve upper stem 61 is formed in an internal space on an upper side, which is a ventilation portion 60b side. In the pilot valve 60, an enlarged diameter portion 60g having an inner diameter larger than that of the first support portion 60f is formed between a lower end and the first support portion 60f.

The pilot valve 60 includes a supply hole 60h. The supply hole 60h is a hole penetrating from the outer peripheral surface of the pilot valve 60 to an inner peripheral surface of the first support portion 60f at a position where the enlarged diameter portion 60g is formed.

The trigger valve upper stem 61 is an example of a second stem, extends in the up-down direction, and is provided with a flange portion 61a protruding outward from an outer peripheral surface on an outer periphery of a lower end side.

The trigger valve upper stem 61 includes fourth sealing portions 61b between the flange portion 61a and an upper end side, and includes a fifth sealing portion 61c on the upper end side. The fourth sealing portions 61b are formed of O-rings having elasticity, and are fitted into two grooves provided in an outer periphery of the trigger valve upper stem 61 in a form in which a part thereof protrudes from an outer peripheral surface between the flange portion 61a of the trigger valve upper stem 61 and the upper end side. The fifth sealing portion 61c is formed of an O-ring having elasticity, and is fitted into a groove provided on an outer periphery of the trigger valve upper stem 61 in a form in which a part thereof protrudes from the outer peripheral surface of the upper end side of the trigger valve upper stem 61.

The first support portion 60f of the pilot valve 60 is a hole having a diameter that allows the fifth sealing portion 61c to be in contact therewith. The enlarged diameter portion 60g of the pilot valve 60 is a hole having a diameter in which a gap through which air passes is formed between an inner surface of the enlarged diameter portion 60g and the fourth sealing portion 61b.

Accordingly, the trigger valve upper stem 61 can be inserted into the enlarged diameter portion 60g and the first support portion 60f of the pilot valve 60, and the fifth sealing portion 61c is slidable in contact with an inner surface of the first support portion 60f. Since the fifth sealing portion 61c slides in contact with the inner surface of the first support portion 60f, a space between an upper space and a lower space of the fifth sealing portion 61c is sealed by the fifth sealing portion 61c inside the pilot valve 60. In the trigger valve upper stem 61, air passes between the inner surface of the enlarged diameter portion 60g and the fourth sealing portion 61b at a position where the fourth sealing portion 61b is inserted into the enlarged diameter portion 60g.

The trigger valve lower stem 62 is an example of a first stem that is actuated in response to an operation, and is provided below the trigger valve upper stem 61 and below the trigger valve portion 6. The trigger valve lower stem 62 extends in the up-down direction, and a flange portion 62a protruding outward from an outer peripheral surface is provided on an outer periphery of an upper end. Further, the trigger valve lower stem 62 is provided with a position restricting flange portion 62b protruding outward from an outer peripheral surface on an outer periphery of an intermediate portion.

The trigger valve portion 6 includes a trigger valve housing 63. The trigger valve housing 63 includes a first trigger valve housing 63d forming an upper portion of the trigger valve housing 63, a second trigger valve housing 63e forming a lower portion of the trigger valve housing 63, and a sleeve 63f inserted into the first trigger valve housing 63d and the second trigger valve housing 63e. The trigger valve housing 63 extends in the up-down direction by an upper portion of the sleeve 63f being inserted into the first trigger valve housing 63d and a lower portion of the sleeve 63f being inserted into and integrated with the second trigger valve housing 63e. The trigger valve housing 63 has an inner diameter corresponding to internal shapes of the first trigger valve housing 63d, the second trigger valve housing 63e, and the sleeve 63f, and a space formed therein that connects an upper end surface to a lower end surface, both the upper end surface and the lower end surface being open.

In the trigger valve housing 63, an exhaust portion 63a is formed at the opening in the upper end surface of the first trigger valve housing 63d. The exhaust portion 63a is a hole having a diameter that allows the upper end portion of the pilot valve 60 to be inserted and allows the second sealing portion 60d to be in contact therewith from the inside of the first trigger valve housing 63d.

Further, in the trigger valve housing 63, a second support portion 63b is formed at the opening in the lower end surface of the second trigger valve housing 63e. The second support portion 63b is a hole having a diameter that allows the trigger valve upper stem 61 to be inserted and allows the fourth sealing portions 61b to be slidable in contact therewith.

Further, in the trigger valve housing 63, a pilot valve support portion 63c is formed in a space inside the first trigger valve housing 63d, the second trigger valve housing 63e, and the sleeve 63f. The pilot valve support portion 63c has a configuration in which a hole having a diameter that allows the flange portion 60a of the pilot valve 60 to be inserted and allows the first sealing portion 60c to be slidable in contact therewith, a hole having a diameter that allows the shaft portion of the pilot valve 60 to be inserted, and the exhaust portion 63a are connected to each other. In the pilot valve support portion 63c, the hole into which the flange portion 60a of the pilot valve 60 is inserted is formed in the second trigger valve housing 63e, and the hole into which the shaft portion of the pilot valve 60 is inserted is formed in the sleeve 63f. The trigger valve housing 63 includes a sealing protrusion 63g with which the third sealing portion 60e is in contact. The sealing protrusion 63g is formed by providing a protrusion protruding inward along a circumferential direction at a predetermined position in the up-down direction on an inner surface of the sleeve 63f. The sealing protrusion 63g forms a hole having a diameter that allows the third sealing portion 60e to be slidable in contact therewith. In the trigger valve portion 6, when the pilot valve 60 moves to a position where the third sealing portion 60e is in contact with the sealing protrusion 63g, a space between a space above the third sealing portion 60e and a space below the third sealing portion 60e in the pilot valve support portion 63c is sealed by the third sealing portion 60e.

The trigger valve portion 6 includes a main chamber conduit 66 that supplies the compressed air to the control chamber 51 via the trigger valve housing 63. The main chamber conduit 66 is formed of a tubular member connecting the trigger valve housing 63 to the main chamber 13, and one end portion thereof is assembled to the trigger valve housing 63. The main chamber conduit 66 includes a conduit sealing portion 66a at the other end portion thereof. The conduit sealing portion 66a is formed of an O-ring having elasticity, and is fitted into a groove provided in an outer periphery near the other end portion of the main chamber conduit 66 in a form in which a part thereof protrudes from an outer peripheral surface of the main chamber conduit 66.

Further, the trigger valve portion 6 includes a connection flow path 67 that connects the trigger valve housing 63 to the control chamber 51 in the main valve housing 53. The connection flow path 67 extends in a lateral direction from an upper end side of the trigger valve housing 63 in the vicinity of the exhaust portion 63a and connects the upper end side of the trigger valve housing 63 to the control chamber 51. The connection flow path 67 connects the trigger valve housing 63 to the main valve housing 53 by a tubular member 67a made of metal.

The trigger valve portion 6 includes a valve stem biasing portion 64 that biases the trigger valve upper stem 61 and the trigger valve lower stem 62 via the trigger valve upper stem 61, and a pilot valve biasing portion 65 that biases the pilot valve 60.

The valve stem biasing portion 64 is formed of, for example, a coil spring, and is placed between the flange portion 61a of the trigger valve upper stem 61 and an outer surface on a lower end side of the trigger valve housing 63. Accordingly, the valve stem biasing portion 64 biases the trigger valve upper stem 61 downward. The valve stem biasing portion 64 biases the trigger valve lower stem 62 downward via the trigger valve upper stem 61.

The pilot valve biasing portion 65 is formed of, for example, a coil spring, and is placed between the surface on the lower end side of the pilot valve 60 and an inner surface on the lower end side of the trigger valve housing 63. Accordingly, the pilot valve biasing portion 65 biases the pilot valve 60 upward.

In the trigger valve portion 6, the pilot valve 60 is placed in the pilot valve support portion 63c of the trigger valve housing 63. Accordingly, the pilot valve 60 is supported to be movable in the up-down direction with respect to the trigger valve housing 63.

Further, in the trigger valve portion 6, the upper end side of the trigger valve upper stem 61 is placed in the first support portion 60f of the pilot valve 60, and an intermediate portion of the trigger valve upper stem 61 is placed in the second support portion 63b of the trigger valve housing 63. Accordingly, the trigger valve upper stem 61 is supported to be movable in the up-down direction with respect to the trigger valve housing 63. The trigger valve upper stem 61 is supported to be movable in the up-down direction with respect to the pilot valve 60.

On the other hand, the trigger valve lower stem 62 is formed of a component different from the trigger valve upper stem 61, and is placed in the third support portion 16 provided in the main body 10. Accordingly, the trigger valve lower stem 62 is supported to be movable in the up-down direction with respect to the main body 10.

The downward movement of the trigger valve lower stem 62 is restricted by the position restricting flange portion 62b coming into contact with the third support portion 16. Accordingly, the trigger valve upper stem 61 is biased by the valve stem biasing portion 64 and is movable downward to a position where the flange portion 61a of the trigger valve upper stem 61 comes into contact with the flange portion 62a of the trigger valve lower stem 62 and the position restricting flange portion 62b of the trigger valve lower stem 62 comes into contact with the third support portion 16.

The trigger valve upper stem 61 is shorter than the trigger valve lower stem 62 in the axial direction. Further, in the trigger valve portion 6, the pilot valve 60, the trigger valve upper stem 61, the valve stem biasing portion 64, and the pilot valve biasing portion 65 are assembled to the trigger valve housing 63.

The head valve 50 and the trigger valve portion 6 in which the trigger valve housing 63 is connected to the main valve housing 53 are accommodated in the cylinder cap 32 and attached to the upper side of the main body 10 on an upper side of the handle portion 11. Accordingly, in the trigger valve portion 6, the pilot valve 60, the trigger valve upper stem 61, the valve stem biasing portion 64, and the pilot valve biasing portion 65 are provided on the upper side of the main body 10 on the upper side of the handle portion 11.

On the other hand, the trigger valve lower stem 62 is supported by the main body 10 at the third support portion 16 provided at a portion between the main body 10 and the handle portion 11. Accordingly, in the nail gun 1A, the trigger valve lower stem 62 is provided between the trigger portion 7 and the trigger valve upper stem 61.

In the trigger valve portion 6, since the trigger valve upper stem 61 is formed of a component different from the trigger valve lower stem 62, the trigger valve lower stem 62 supported by the third support portion 16 provided in the main body 10 and the trigger valve upper stem 61 supported by the main body 10 via the trigger valve housing 63 do not need to be disposed coaxially.

Therefore, in the nail gun 1A, the trigger valve upper stem 61 and the trigger valve lower stem 62 are supported such that a first reference line L1 along the axial direction passing through the center of the trigger valve upper stem 61 and a second reference line L2 along the axial direction passing through the center of the trigger valve lower stem 62 are disposed at positions offset in a direction intersecting the axial direction. In this example, in order to dispose the trigger valve portion 6, specifically, the pilot valve 60 close to the main valve portion 5, specifically, the control chamber 51, the trigger valve upper stem 61 is provided on the inner side closer to the main valve portion 5, specifically, the control chamber 51 than the trigger valve lower stem 62 is, and the trigger valve lower stem 62 is offset from the trigger valve upper stem 61 in the direction intersecting the axial direction.

The contact portion 8 includes a contact top 80 protruding downward from the injection port 12b, a first contact arm 81a connected to the contact top 80, and a second contact arm 81b engageable with a contact lever portion 71 (to be described later) of the trigger portion 7. The first contact arm 81a is an example of a contact arm, and is supported by the nose portion 12 so as to be relatively movable in the up-down direction. The second contact arm 81b is an example of the contact arm, and is supported to be movable in the up-down direction relative to the main body 10. In the contact portion 8, the second contact arm 81b is biased by the biasing member 82 in the down direction, which is a direction in which the contact top 80 protrudes downward from the injection port 12b. Accordingly, in the contact portion 8, the contact top 80 is pressed against the driven member, so that the first contact arm 81a pushes up the second contact arm 81b, and the second contact arm 81b moves upward relative to the main body 10. The first contact arm 81a and the second contact arm 81b may be integrally formed.

The trigger portion 7 includes a trigger lever 70. The trigger lever 70 extends from the main body 10 along the handle portion 11, and an end portion thereof on a main body 10 side is supported to be rotatable with respect to the main body 10 about a shaft portion 70a as a fulcrum. The trigger portion 7 includes a biasing member 70b that biases the trigger lever 70. The biasing member 70b is formed of, for example, a coil spring, and an end portion of the trigger lever 70 on a side extending from the main body 10 along the handle portion 11 is biased in a direction away from the handle portion 11.

The trigger portion 7 includes the contact lever portion 71. The contact lever portion 71 is rotatably supported by the trigger lever 70 about the shaft portion 73a as a fulcrum. A tip end portion of the contact lever portion 71 is located on a movement path of the second contact arm 81b by the operation in which the second contact arm 81b moves upward relative to the main body 10. A portion of the contact lever portion 71 between the tip end portion and the shaft portion 73a faces the trigger valve lower stem 62. Accordingly, the contact lever portion 71 is engageable with the second contact arm 81b and the trigger valve lower stem 62 of the trigger valve portion 6.

### {Operation Example of Nail Gun}

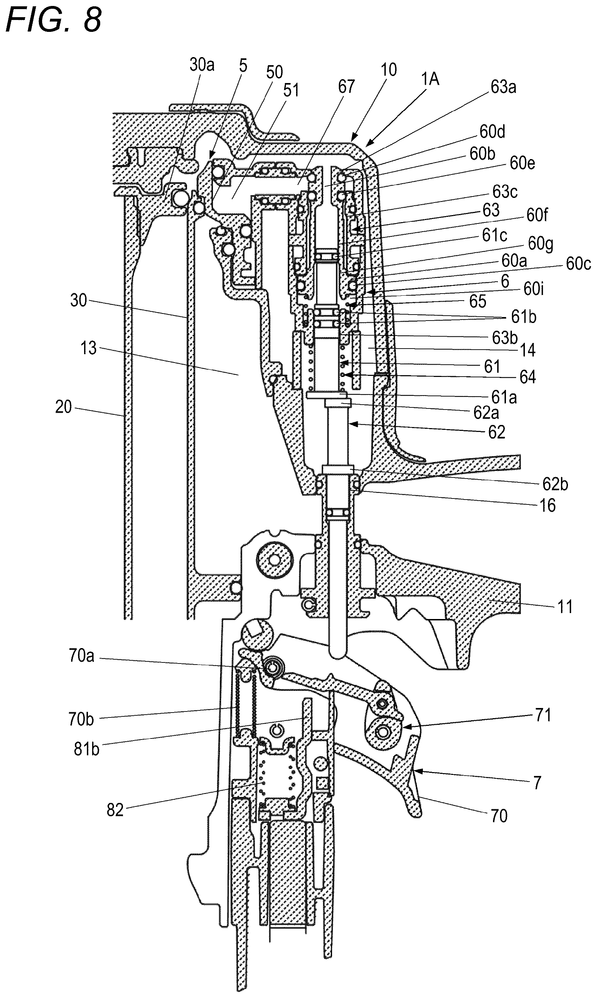

FIGS. 8 to 11 are side sectional views of a main part illustrating an example of operation of the nail gun according to the present illustrative embodiment. Next, the operation of the nail gun 1A will be described.

In a standby state illustrated in FIG. 8, the trigger valve upper stem 61 of the trigger valve portion 6 is biased downward by the valve stem biasing portion 64, and moves to an initial position. When the trigger valve upper stem 61 is at the initial position, the flange portion 61a is in contact with the flange portion 62a of the trigger valve lower stem 62.

Further, when the trigger valve upper stem 61 is at the initial position, the fourth sealing portions 61b are placed in the second support portion 63b of the trigger valve housing 63. Accordingly, an inner surface of the second support portion 63b and the fourth sealing portion 61b are in contact with each other, and airtightness is maintained.

Accordingly, the compressed air supplied from the main chamber conduit 66 illustrated in FIG. 7 is supplied to the enlarged diameter portion 60g through the supply hole 60h. In the trigger valve upper stem 61, the fifth sealing portion 61c is located above the supply hole 60h. Therefore, the compressed air is supplied to the enlarged diameter portion 60g below the fifth sealing portion 61c, so that the flange portion 60a of the pilot valve 60 is pushed upward by the air pressure. Therefore, the pilot valve 60 is moved to the initial position by the air pressure pushing the flange portion 60a of the pilot valve 60 upward and the biasing of the pilot valve biasing portion 65. In a state where the pilot valve 60 is moved to the initial position, a trigger valve lower chamber 60i is formed below the pilot valve 60, and the trigger valve lower chamber 60i has the air pressure of the compressed air.

At the initial position, the upper end portion of the pilot valve 60 enters the exhaust portion 63a of the trigger valve housing 63, and the second sealing portion 60d comes into contact therewith from the inside of the first trigger valve housing 63d. Accordingly, the exhaust portion 63a is closed.

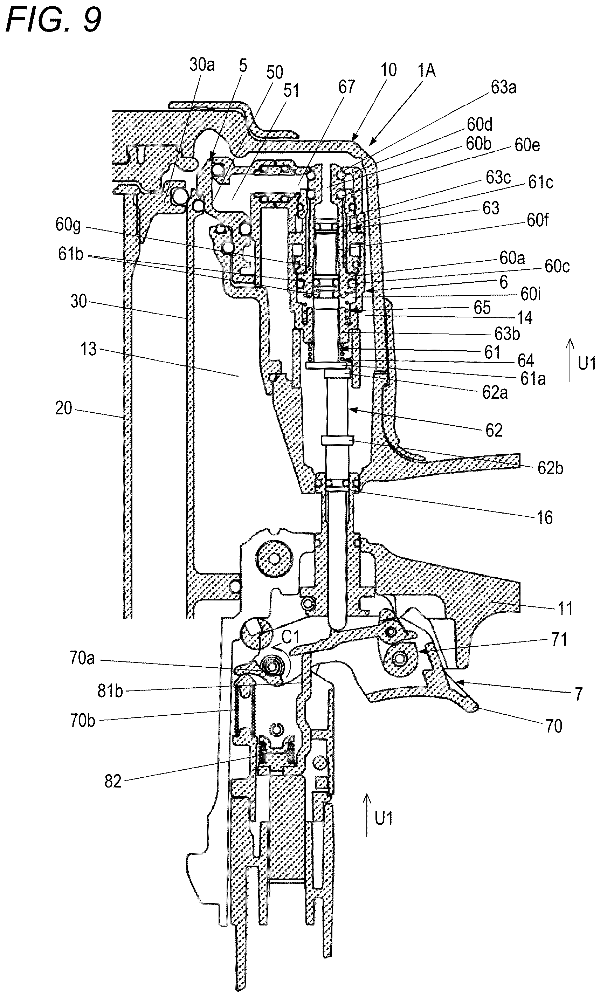

An operator first pulls the trigger lever 70 from the standby state illustrated in FIG. 8. When the trigger lever 70 is pulled, as illustrated in FIG. 9, the trigger lever 70 rotates in an arrow C1 direction with the shaft portion 70a as a fulcrum. When the trigger lever 70 rotates with the shaft portion 70a as a fulcrum, the contact lever portion 71 also moves in synchronization.

In a state in which the trigger lever 70 is pulled, the operator presses the contact top 80 against the driven member, and moves the nail gun 1A in a direction approaching the driven member. When the contact top 80 is pressed against the driven member, the first contact arm 81a pushes up the second contact arm 81b, and the second contact arm 81b moves upward as indicated by an arrow U1 relative to the main body 10.

When the second contact arm 81b moves upward relative to the main body 10, the second contact arm 81b comes into contact with the tip end portion of the contact lever portion 71 and pushes the contact lever portion 71 toward the trigger valve lower stem 62. Accordingly, the contact lever portion 71 moves the trigger valve lower stem 62 upward as indicated by the arrow U1 relative to the main body 10.

In the trigger valve portion 6, when the trigger valve lower stem 62 moves upward relative to the main body 10, the trigger valve upper stem 61 is pushed by the trigger valve lower stem 62 and moves upward relative to the main body 10.

When the second contact arm 81b moves upward relative to the main body 10, and the trigger valve lower stem 62 and the trigger valve upper stem 61 move upward relative to the main body 10 to an operation position, the trigger valve portion 6 is in a sign ON state in which the trigger valve portion 6 is operable.

That is, when the trigger valve upper stem 61 moves upward relative to the main body 10 to the operation position, the fourth sealing portion 61b enters the enlarged diameter portion 60g from the second support portion 63b. Accordingly, the trigger valve lower chamber 60i communicates with the exhaust chamber 14, and the air pressure of the trigger valve lower chamber 60i becomes an atmospheric pressure via the gap between the inner surface of the second support portion 63b and an outer surface of the trigger valve upper stem 61.

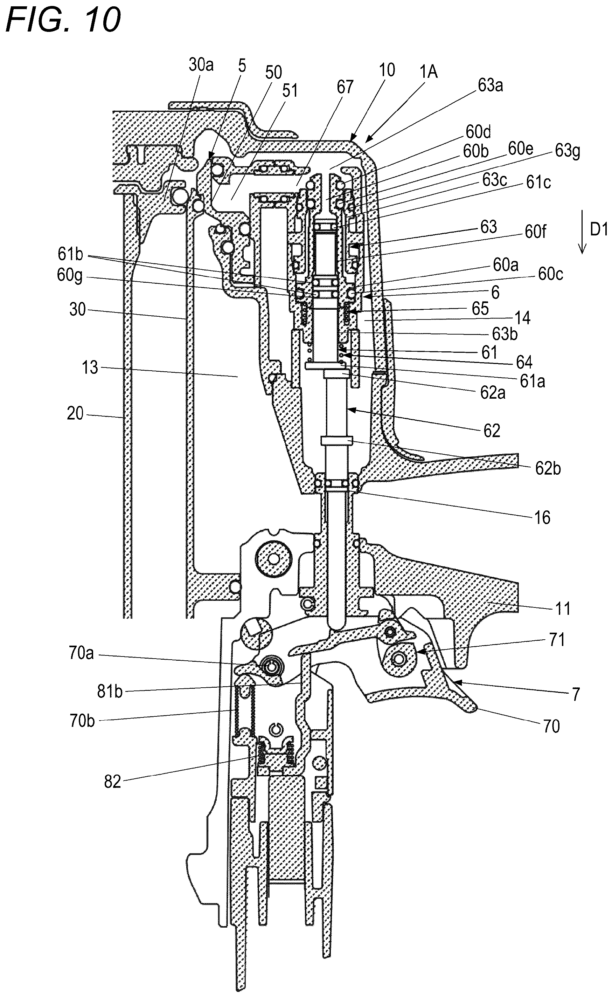

Therefore, in the pilot valve 60, as illustrated in FIG. 10, the pilot valve 60 moves in a downward direction as indicated by the arrow D1 while compressing the pilot valve biasing portion 65 due to the force of pressing the flange portion 60a downward by the air pressure of the compressed air supplied from the main chamber conduit 66 illustrated in FIG. 7 to the pilot valve support portion 63c.

When the pilot valve 60 moves downward, the exhaust portion 63a of the trigger valve housing 63 opens. Further, when the pilot valve 60 moves downward to a position where the third sealing portion 60e comes into contact with the sealing protrusion 63g, the space between the space above the third sealing portion 60e and a space below the third sealing portion 60e in the pilot valve support portion 63c is sealed by the third sealing portion 60e. Accordingly, the compressed air passes through the connection flow path 67 from the control chamber 51 and is exhausted to the exhaust chamber 14.

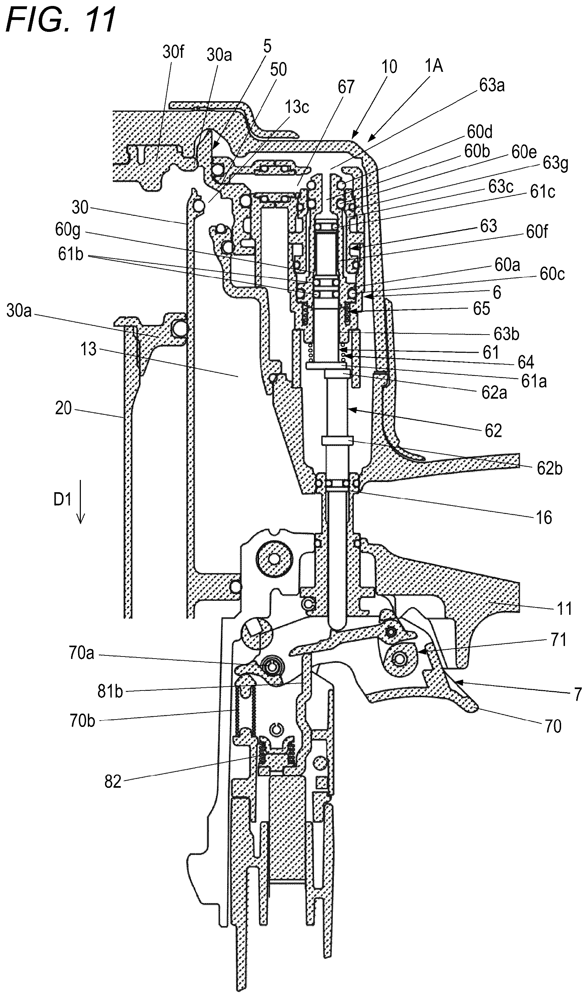

When the compressed air is exhausted from the control chamber 51, as illustrated in FIG. 11, the head valve 50 is moved upward by the air pressure of the compressed air in the main chamber 13, the supply flow path 13c is opened, and the space between the striking cylinder 30 and the exhaust chamber 14 is sealed. When the supply flow path 13c is opened, the compressed air is supplied from the main chamber 13 to the striking cylinder 30, and the striking piston 30a moves downward. Accordingly, the nail (not illustrated) is driven out.

As action and effects of the nail gun 1A, in the trigger valve portion 6, the pilot valve 60, the trigger valve upper stem 61, the valve stem biasing portion 64, and the pilot valve biasing portion 65 are assembled to the trigger valve housing 63, and are provided on the upper side of the main body 10 with respect to the handle portion 11. The main valve portion 5 is attached to the upper side of the main body 10 with respect to the handle portion 11. Then, in the trigger valve portion 6 and the main valve portion 5, the trigger valve housing 63 and the control chamber 51 in the main valve housing 53 are connected by the connection flow path 67.

As described above, since the trigger valve portion 6 and the main valve portion 5 are provided on the upper side of the main body 10, a flow path length of the connection flow path 67 can be shortened. Further, a distance between the control chamber 51 and the second sealing portion 60d, which is an opening and closing portion of the exhaust portion 63a, can be shortened. In the main valve portion 5, the air in the control chamber 51 is taken in and exhausted by the operation of the trigger valve portion 6, and thus the opening and closing of the head valve 50 are controlled. Accordingly, the flow path length of the connection flow path 67 can be shortened, and the distance between the second sealing portion 60d and the control chamber 51 can be shortened, so that the time required for intake and exhaust is shortened, and the operation response is improved. Since the connection flow path 67 is formed of the tubular member 67a made of metal, the temperature in the conduit can be easily released to the outside, and freezing of moisture in the conduit can be prevented.

When the trigger valve portion 6 is provided on the upper portion of the main body 10, the distance between the trigger portion 7 provided below the handle portion 11 and the trigger valve portion 6 increases. In this configuration, when the trigger valve upper stem 61 is extended so that the trigger valve upper stem 61 can be directly operated by the trigger portion 7, it is difficult to perform alignment for bringing the extended trigger valve upper stem 61 into contact with the contact lever portion 71 of the trigger portion 7. That is, the trigger valve portion 6 is required to have high dimensional accuracy in order to reliably seal and release the sealing of each portion by the up-down movement of the trigger valve upper stem 61. However, when the trigger valve upper stem 61 is extended, the influence of deformation such as warping of the stem is large. Further, in order to assemble the trigger valve portion 6 assembled to the main valve portion 5 in the cylinder cap 32 and the trigger portion 7 assembled to the main body 10 using the extended integral trigger valve upper stem 61, high accuracy is required for assembly, making the alignment difficult.

On the other hand, the nail gun 1A includes the trigger valve lower stem 62 formed of a component different from the trigger valve upper stem 61. Since the trigger valve lower stem 62 is provided between the trigger portion 7 and the trigger valve upper stem 61 at a portion between the main body 10 and the handle portion 11, the trigger valve lower stem 62 can be disposed close to the trigger portion 7. In the trigger portion 7, the trigger lever 70 is supported by the main body 10 via the shaft portion 70a, and the trigger valve lower stem 62 is supported by the main body 10 via the third support portion 16. Accordingly, a dimensional setting for bringing the trigger valve lower stem 62 into contact with the contact lever portion 71 of the trigger portion 7 is relaxed. Since the trigger valve lower stem 62 functions when coming into contact with the trigger valve upper stem 61 and pushing it up, the trigger valve lower stem 62 functions even if the trigger valve lower stem 62 and the trigger valve upper stem 61 are not coaxial. Therefore, it is sufficient to bring the trigger valve upper stem 61 into contact with the trigger valve lower stem 62, which makes it easy to align the trigger valve portion 6 with the main body 10. Further, since the trigger valve upper stem 61 is configured to be shorter in the axial direction than the trigger valve lower stem 62, the deformation such as warping of the trigger valve upper stem 61 can be prevented, and the predetermined airtightness can be ensured.

Further, since the trigger valve upper stem 61 and the trigger valve lower stem 62 are formed of different components, the trigger valve upper stem 61 can be offset from the trigger valve lower stem 62 in the direction intersecting the axial direction, and the trigger valve portion 6 can be disposed close to the main valve portion 5. Accordingly, the flow path length of the connection flow path 67 can be further shortened, the time required for intake and exhaust is shortened, and the operation response is improved.

Further, since the trigger valve upper stem 61, which is required to be more airtight than the trigger valve lower stem 62, is configured to be shorter than the trigger valve lower stem 62 in the axial direction, even when an uneven load is applied to the trigger valve upper stem 61, a decrease in airtightness due to the sealing portions is prevented.

Further, by connecting the trigger valve housing 63 of the trigger valve portion 6 to the main valve housing 53 of the main valve portion 5, the main valve portion 5 and the trigger valve portion 6 can be made into a unit, and the unitized main valve portion 5 and trigger valve portion 6 are accommodated in the cylinder cap 32 and attached to the upper side of the main body 10. Accordingly, the cylinder cap 32 in which the main valve portion 5 and the trigger valve portion 6 are assembled can be supplied as an assembly component. Further, when the unitized main valve portion 5 and trigger valve portion 6 are attached to the upper side of the main body part 10, as illustrated in FIG. 7, the conduit sealing portion 66a of the main chamber conduit 66 comes into contact with an inner surface of a supply conduit 13d connected to the main chamber 13. Accordingly, by attaching the unitized main valve portion 5 and trigger valve portion 6 to the main body 10, the main chamber conduit 66 and the supply conduit 13d can be connected in a state where the compressed air can be supplied.

### {Modification of Nail Gun}

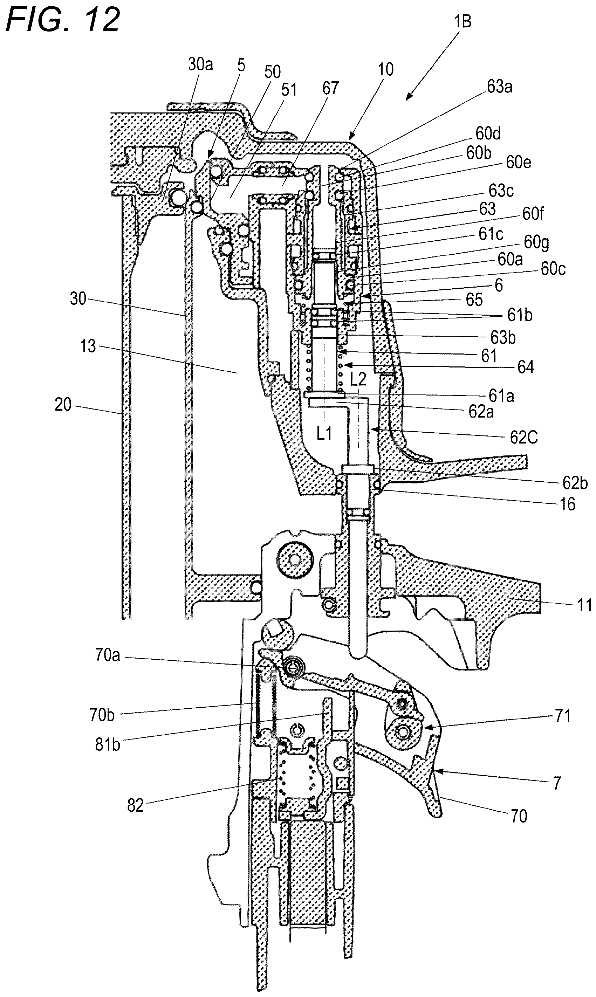

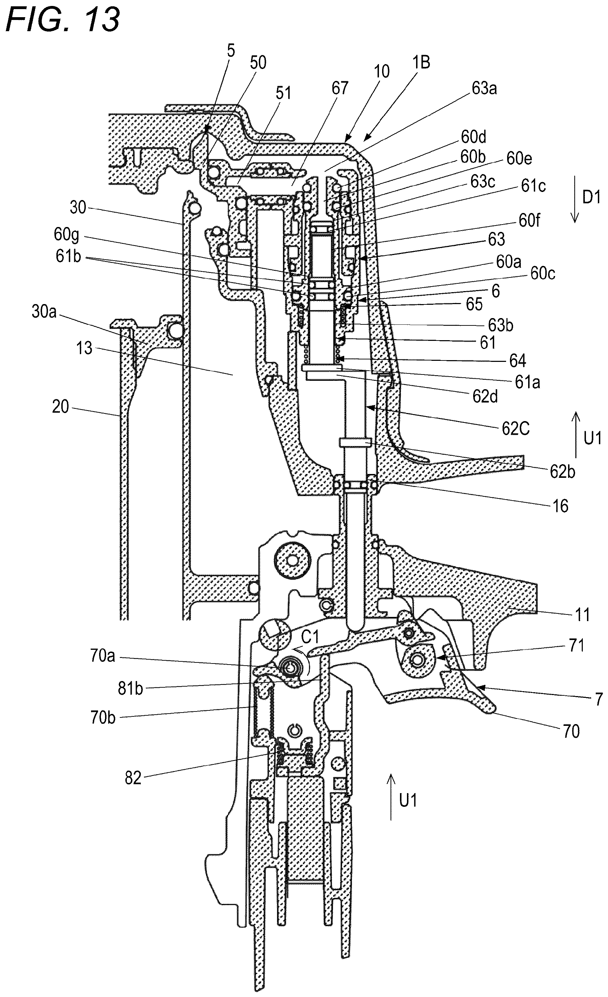

FIG. 12 is a side sectional view of a main part illustrating a first modification of the nail gun according to the present illustrative embodiment, and FIG. 13 is a side sectional view of a main part illustrating an example of operation of the nail gun according to the first modification of the present illustrative embodiment.

A nail gun 1B according to the modification includes a connecting protrusion 62d on a trigger valve lower stem 62C. The connecting protrusion 62d is a portion extending in the lateral direction from an upper end of the trigger valve lower stem 62C in accordance with an offset amount of the trigger valve lower stem 62C with respect to the trigger valve upper stem 61.

The connecting protrusion 62d of the trigger valve lower stem 62C is in contact with the flange portion 61a of the trigger valve upper stem 61. Other configurations are the same as those of the nail gun 1A.

Similarly to the nail gun 1A, in the operation of the nail gun 1B, the operator pulls the trigger lever 70, presses the contact top 80 against the driven member in a state where the trigger lever 70 is pulled, and moves the nail gun 1B in a direction approaching the driven member.

When the contact top 80 illustrated in FIG. 1 and the like is pressed against the driven member, the second contact arm 81b moves upward as indicated by the arrow U1 relative to the main body 10.

When the second contact arm 81b moves upward relative to the main body 10, the second contact arm 81b comes into contact with the contact lever portion 71 and pushes the contact lever portion 71 toward the trigger valve lower stem 62C. Accordingly, the contact lever portion 71 moves the trigger valve lower stem 62C upward as indicated by the arrow U1 relative to the main body 10.

In the trigger valve portion 6, when the trigger valve lower stem 62C moves upward relative to the main body 10, the flange portion 61a of the trigger valve upper stem 61 is pushed by the connecting protrusion 62d of the trigger valve lower stem 62C, and the trigger valve upper stem 61 moves upward relative to the main body 10.

When the second contact arm 81b moves upward relative to the main body 10 and the trigger valve lower stem 62C and the trigger valve upper stem 61 move upward relative to the main body 10 to an operation position, the trigger valve portion 6 is in a sign ON state in which the trigger valve portion 6 is operable. Accordingly, the head valve 50 moves upward, the compressed air is supplied from the main chamber 13 to the striking cylinder 30, and the striking piston 30a moves downward. Thus, the nail (not illustrated) is driven out.

The length of the connecting protrusion 62d in an extension direction can be easily set with respect to the circular flange portion. Accordingly, an offset amount of the trigger valve lower stem 62C relative to the trigger valve upper stem 61 in the direction intersecting the axial direction can be increased. Accordingly, the trigger valve upper stem 61 can be brought closer to the main valve portion 5, and the trigger valve portion 6 can be brought closer to the main valve portion 5. Thus, the flow path length of the connection flow path 67 can be further shortened, the time required for intake and exhaust is shortened, and the operation response is improved. Further, since the trigger valve portion 6 is brought closer to the main valve portion 5, the cylinder cap 32 can be made more compact, and the upper portion of the main body 10 can be made compact.

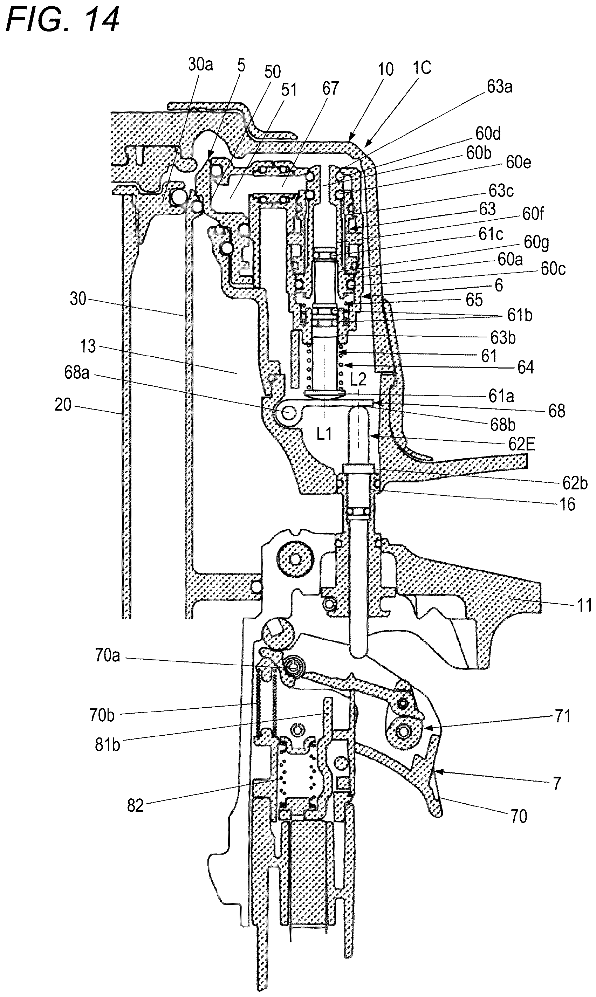

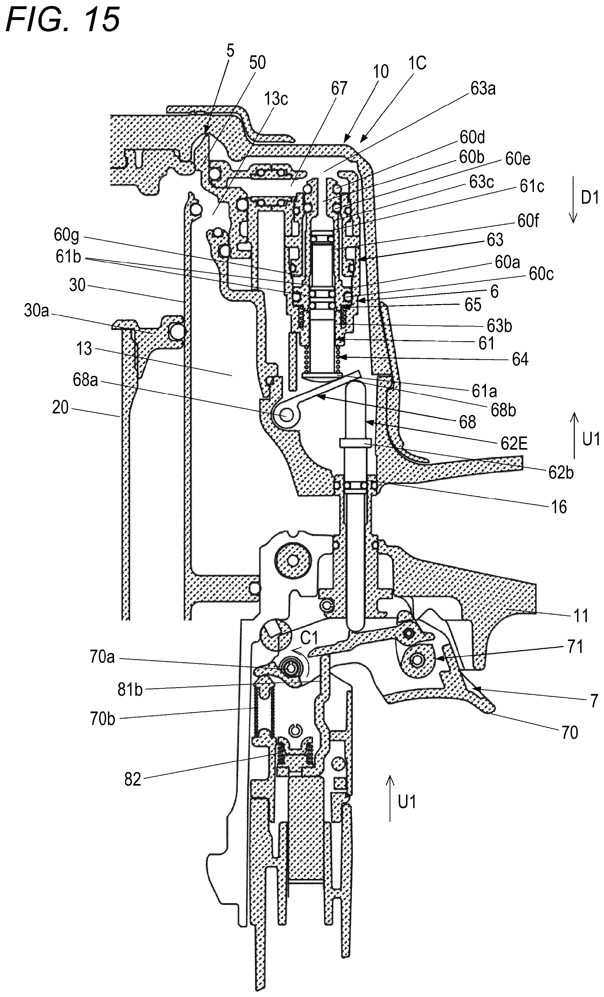

FIG. 14 is a side sectional view of a main part illustrating a second modification of the nail gun according to the present illustrative embodiment, and FIG. 15 is a side sectional view of a main part illustrating an example of operation of the nail gun according to the second modification of the present illustrative embodiment.

A nail gun 1C according to the second modification includes a transmission member 68 that transmits the movement of a trigger valve lower stem 62E to the trigger valve upper stem 61. The transmission member 68 extends in the lateral direction connecting the upper end portion of the trigger valve lower stem 62E to the flange portion 61a of the trigger valve upper stem 61. An end portion of the transmission member 68 opposite to the trigger valve lower stem 62E with respect to the trigger valve upper stem 61 is rotatably supported by the main body 10 with the shaft portion 68a as a fulcrum.

In the transmission member 68, a lower surface of a tip end portion 68b opposite to the shaft portion 68a is in contact with an upper end portion of the trigger valve lower stem 62E, and an upper surface of a portion between the shaft portion 68a and the tip end portion 68b is in contact with the flange portion 61a of the trigger valve upper stem 61. The upper end portion of the trigger valve lower stem 62E and a lower surface of the flange portion 61a of the trigger valve upper stem 61 may have curved surfaces at portions in contact with the transmission member 68. Other configurations are the same as those of the nail gun 1A.

Similarly to the nail gun 1A, in the operation of the nail gun 1C, the operator pulls the trigger lever 70, presses the contact top 80 against the driven member in a state where the trigger lever 70 is pulled, and moves the nail gun 1C in a direction approaching the driven member.

When the contact top 80 illustrated in FIG. 1 and the like is pressed against the driven member, the second contact arm 81b moves upward as indicated by the arrow U1 relative to the main body 10.

When the second contact arm 81b moves upward relative to the main body 10, the second contact arm 81b comes into contact with the contact lever portion 71 and pushes the contact lever portion 71 toward the trigger valve lower stem 62E. Accordingly, the contact lever portion 71 moves the trigger valve lower stem 62E upward as indicated by the arrow U1 relative to the main body 10.

When the trigger valve lower stem 62E moves upward relative to the main body 10, the trigger valve portion 6 pushes the tip end portion 68b of the transmission member 68 upward. When the tip end portion 68b is pushed upward, the transmission member 68 rotates about the shaft portion 68a as a fulcrum, and a portion between the shaft portion 68a and the tip end portion 68b moves upward. Accordingly, in the transmission member 68, the flange portion 61a of the trigger valve upper stem 61 is pushed by the transmission member 68, and the trigger valve upper stem 61 moves upward relative to the main body 10.

When the second contact arm 81b moves upward relative to the main body 10 and the trigger valve lower stem 62E and the trigger valve upper stem 61 move upward relative to the main body 10 to an operation position, the trigger valve portion 6 is in a sign ON state in which the trigger valve portion 6 is operable. Accordingly, the head valve 50 moves upward, the compressed air is supplied from the main chamber 13 to the striking cylinder 30, and the striking piston 30a moves downward. Thus, the nail (not illustrated) is driven out.

The length of the transmission member 68 in the extension direction from the tip end portion 68b to the shaft portion 68a can be easily set. Accordingly, an offset amount of the trigger valve lower stem 62E relative to the trigger valve upper stem 61 in the direction intersecting the axial direction can be increased. Further, in the transmission member 68, a movement amount of the trigger valve lower stem 62E can be changed relative to a movement amount until the trigger valve upper stem 61 reaches the operation position according to the ratio of the length from the shaft portion 68a to the position that the trigger valve lower stem 62E is in contact with and the length from the shaft portion 68a to the position that the trigger valve upper stem 61 is in contact with. By changing the movement amount of the trigger valve upper stem 61 and the trigger valve lower stem 62E, an operation response can be set according to the size and application of the nail gun 1C. Further, by reversing the positions of the transmission member 68 and the shaft portion 68a of the second modification, it is also possible to speed up the operation with respect to the stroke of the second contact arm 81b.

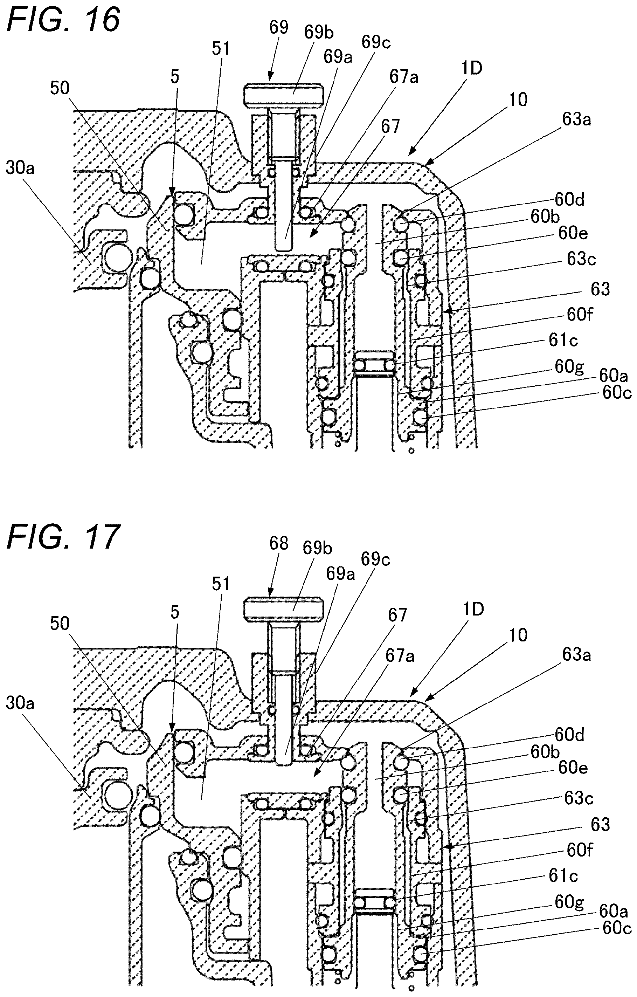

FIGS. 16 and 17 are side sectional views of a main part illustrating a third modification of the nail gun according to the present illustrative embodiment.

A nail gun 1D according to the third modification includes a flow path area adjustment portion 69. The flow path area adjustment portion 69 is provided in the connection flow path 67 and adjusts the size of a cross-sectional area of the connection flow path 67. The flow path area adjustment portion 69 includes, for example, a screw shaft portion 69a, an operation portion 69b that rotates the screw shaft portion 69a, and a screw hole portion 69c that supports the screw shaft portion 69a. As illustrated in FIGS. 16 and 17, by rotating the operation portion 69b, the flow path area adjustment portion 69 switches the length of the screw shaft portion 69a protruding into the connection flow path 67, and adjusts the size of the cross-sectional area of the connection flow path 67. Accordingly, a flow rate of air passing through the connection flow path 67 can be adjusted.

## Claims

1. A driving tool comprising:
a main chamber configured to store compressed air;
a striking cylinder configured to move a striking piston in an axial direction along an up-down direction by being supplied with the compressed air stored in the main chamber;
a main valve portion configured to open and close communication between the striking cylinder and the main chamber;
a trigger valve portion configured to cause the main valve portion to operate; and
a first stem configured to be actuated in response to an operation,
wherein the trigger valve portion includes a pilot valve configured to cause the main valve portion to operate, and a second stem configured to control intake and exhaust of the compressed air to switch whether the pilot valve operates, and
wherein the first stem causes the second stem to operate.

2. The driving tool according to claim 1, wherein the first stem is in contact with the second stem and causes the second stem to operate.

3. The driving tool according to claim **1,** further comprising:
a trigger portion configured to receive an operation,
wherein the second stem is actuated by operation of the trigger portion.

4. The driving tool according to claim 1, wherein the first stem and the second stem are offset in a direction intersecting an axial direction, and the second stem is provided on a side closer to the main valve portion than the first stem is.

5. The driving tool according to claim 3, further comprising:
a main body extending in an up-down direction; and
a handle portion extending from the main body in a direction intersecting the main body,
wherein the trigger valve portion and the main valve portion are provided above the handle portion and on an upper side of the main body,
wherein the trigger portion is supported by the main body and is provided below the handle portion,
and
wherein the first stem is provided between the second stem and the trigger portion.

6. The driving tool according to claim 5, wherein the second stem is shorter than the first stem in the axial direction.

7. The driving tool according to claim 5,
wherein the main valve portion includes a main valve housing in which a head valve configured to open and close the communication between the striking cylinder and the main chamber is supported to be movable in the up-down direction,
wherein the trigger valve portion includes a trigger valve housing in which the pilot valve and the second stem are supported to be movable in the up-down direction, and
wherein the trigger valve portion is assembled to the main valve portion by connecting the trigger valve housing to the main valve housing.

8. The driving tool according to claim 7, further comprising:
a cylinder cap attached to the main body and configured to cover an upper side of the main body,
wherein the trigger valve housing of the trigger valve portion and the main valve housing of the main valve portion are accommodated in the cylinder cap.

9. The driving tool according to claim 7, further comprising:
a main chamber conduit connected to the main chamber,
wherein the main chamber conduit is connected to the trigger valve housing and assembled to the trigger valve portion.

10. The driving tool according to claim 7, further comprising:
a connection flow path connecting the trigger valve portion to the main valve portion,
wherein the connection flow path connects the trigger valve housing to the main valve housing by a tubular member made of metal.

11. The driving tool according to claim 1, further comprising:
a transmission member configured to transmit movement of the first stem to the second stem.

12. The driving tool according to claim 11, wherein the transmission member causes an amount of movement of the second stem to be different from an amount of movement of the first stem.

13. The driving tool according to claim 7, further comprising:
a connection flow path connecting the trigger valve portion to the main valve portion,
wherein the connection flow path includes a flow path area adjustment portion.

14. A driving tool comprising:
a main body extending in an up-down direction;
a main chamber configured to store compressed air;
a striking cylinder configured to move a striking piston in an axial direction by being supplied with the compressed air stored in the main chamber;
a main valve portion configured to open and close communication between the striking cylinder and the main chamber;
a trigger valve portion configured to cause the main valve portion to operate; and
a cylinder cap attached to the main body and configured to cover an upper side of the main body,
wherein the main valve portion and the trigger valve portion are accommodated in the cylinder cap.
